(19) Europäisches Patentamt / European Patent Office / Office européen des brevets

(11) **EP 3 928 978 A1**

(12) # EUROPEAN PATENT APPLICATION
published in accordance with Art. 153(4) EPC

(43) Date of publication:
**29.12.2021 Bulletin 2021/52**

(21) Application number: **20760147.7**

(22) Date of filing: **13.02.2020**

(51) Int Cl.:
**B32B 27/28** (2006.01)   **B32B 27/32** (2006.01)
**B32B 27/34** (2006.01)   **C08L 23/10** (2006.01)
**C08L 31/04** (2006.01)   **C08L 77/00** (2006.01)
**A61J 1/10** (2006.01)

(86) International application number:
**PCT/JP2020/005580**

(87) International publication number:
**WO 2020/170935 (27.08.2020 Gazette 2020/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.02.2019 JP 2019026725**

(71) Applicant: **MCPP Innovation LLC**
**Tokyo 100-8251 (JP)**

(72) Inventor: **KADOWAKI, Yuji**
**Tokyo 100-8251 (JP)**

(74) Representative: **Vossius & Partner**
**Patentanwälte Rechtsanwälte mbB**
**Siebertstraße 3**
**81675 München (DE)**

(54) **RESIN COMPOSITION, FILM, MULTILAYER BODY AND PACKAGING BAG FOR MEDICAL USE**

(57) A resin composition comprising: an ethylene-vinyl acetate copolymer (A); and a propylene-based resin (B), wherein the melt flow rate (MFR: 190°C, 2.16 kg) MFR (A) of the ethylene-vinyl acetate copolymer (A) and the melt flow rate (MFR: 190°C, 2.16 kg) MFR (B) of the propylene-based resin (B) satisfy relational expression (i) below, and wherein the resin composition has an endothermic peak at 120 to 170°C in DSC (differential scanning calorimeter) measurement and has a heat of fusion of 15 to 40 mJ/mg at 120 to 170°C: 4 g/10 min ≤ MFR (A) - MFR (B) ≤ 35 g/10 min. (i)

EP 3 928 978 A1

**Description**

Technical Field

The present invention relates to a resin composition suitable for a dielectric heat-weldable resin composition, to a film formed of the resin composition, to a multilayer body including the film, and to a packaging bag for medical use that uses the film or the multilayer body. The invention relates particularly to a resin composition for dielectric heat welding that contains an ethylene-vinyl acetate copolymer (hereinafter may be abbreviated as EVA) and a propylene-based resin.

Background Art

The strength of a polyvinyl chloride resin (hereinafter may be abbreviated as PVC) can be easily changed by adjusting its composition, and the polyvinyl chloride resin is used for many applications because of its characteristics such as flexibility in transparency ranging from transparent to opaque, good appearance such as high gloss and shine, a good feel like leather, and flame resistance.

For example, PVC is used for pipes, ducts, sashes, etc. that require high strength and for grips, artificial leathers, hoses, wrapping films, etc. that require flexibility. PVC is used also for medical applications. For example, PVC is used for infusion bags and tubes, bags for blood-related materials, and blood circuit tubes.

PVC also has good workability and can be used not only for injection molding and extrusion molding for which general thermoplastic resins can be used but also for calendering, embossing, and dipping.

To join PVC sheets, PVC films, or PVC tubes together, welding methods such as heat welding, e.g., heat sealing, dielectric heat welding, and ultrasonic welding are generally used. Among these methods, dielectric heat welding is a processing method in which a high-frequency welder, for example, is used to melt and weld a resin itself by internal heat generation of the resin. With the dielectric heat welding method using the high-frequency welder, parts to be welded can be welded uniformly and reliably. Therefore, the dielectric heat welding method is suitable for production of packaging bags for medical use that are subject to tight regulations on shape, material, performance, etc. and require a high level of safety, and examples of these packaging bags include storage containers for chemicals and bodily fluids such as infusion bags and blood bags.

As described above, PVC has many notable capabilities but has drawbacks to be improved such as insufficient heat resistance and chemical resistance and low shock resistance. To address these problems, a resin such as polyolefin having better heat resistance and shock resistance than PVC is bonded or welded together with PVC. This can mitigate the drawbacks of PVC while the workability of PVC is maintained.

PTL 1 discloses a resin composition containing, as essential components, an acrylic-based thermoplastic elastomer, a propylene-based elastomer having a specific density, and an ethylene-vinyl acetate copolymer (EVA) and also discloses a multilayer body using the resin composition. It is stated in PTL 1 that the layer formed of the resin composition has good adhesion to a PVC layer, a polyolefin resin layer, and an EVA layer even before and after heat treatment and can be bonded using a melt forming method or a thermal bonding method without using an organic solvent-based adhesive.

PTL 2 discloses a multilayer structural body including: a radio frequency susceptible layer formed of a radio frequency susceptible resin composition containing polypropylene, polyethylene, polyamide, and a styrene-based elastomer; and skin layers formed of a polypropylene-containing polymer and disposed on opposite sides of the radio frequency susceptible layer. It is stated in PTL 2 that medical containers such as blood bags can be produced from the multilayer structural body by utilizing the radio frequency sealability of the radio frequency susceptible layer.

Citation List

Patent Literature

PTL 1: JP2018-16759A
PTL 2: JP2005-527401A

The resin composition described in PTL 1 can be used to bond a PVC layer and a polyolefin resin together using melt forming or thermal bonding. However, no mention is made to bonding by dielectric heat welding using, for example, a high-frequency welder. The resin composition described in PTL 1 cannot be used for bonding of PVC by dielectric heat welding in some cases.

The radio frequency susceptible resin composition described in PTL 2 is compatible with dielectric heat welding using, for example, a high-frequency welder. However, PTL 2 is a technique for welding the polypropylene-containing polymer layers used as the skin layers together using dielectric heat welding, and no consideration is given to bonding of PVC.

An improvement in the adhesion to PVC by dielectric heat welding using a high-frequency welder etc. is a feature required particularly for applications such as packaging bags for medical use including bags for blood-related materials, infusion bags, etc. To meet a recent requirement for PVC elimination, there is also a need for an improvement in dielectric heat weldability to a polyolefin resin layer.

For the applications such as packaging bags for medical use including infusion bags, bags for blood-related materials, etc., requirements for ultraviolet (hereinafter may be abbreviated as UV) absorption spectral and absorbance are specified in JIS T3217:2016, The Japanese Pharmacopoeia, etc. (for example, UV absorbance measurement tests described in "The Japanese Pharmacopoeia Seventeenth Edition, General Tests, 7.02 Test Methods for Plastic Containers, 1.2. Extractable substances, (iv) UV spectrum" and "The Japanese Pharmacopoeia Seventeenth Edition, General Tests, 7.02 Test Methods for Plastic Containers, 2. Requirements for plastic containers for aqueous injections, 2.1. Polyethylene or polypropylene containers for aqueous injections, (8) Extractable substances, (iv) UV spectrum").

However, in the resin composition described in PTL 1, the acrylic-based thermoplastic elastomer is an essential component, so that the UV absorbance is high. Therefore, the UV absorbance may exceeds the upper limit of the requirements for the UV absorbance in the above tests.

Summary of Invention

It is an object of the present invention to provide a resin composition that can improve the drawbacks of PVC such as heat resistance, can be welded to PVC by dielectric heat welding that is a representative welding method for PVC, can be used to weld even films or sheets easily, has low UV absorbance, and is preferably applicable to pharmaceutical applications such as bags for blood-related materials and infusion bags.

The present inventor has found that the above problems can be solved by a resin composition which contains an EVA and a propylene-based resin, in which the MFR of the EVA and the MFR of the propylene-based resin satisfy a specific relational expression, which has specific thermal characteristics, and which preferably further contains a polyamide resin. Thus, the present invention has been completed.

The present invention is summarized in the following [1] to [17] .

[1] A resin composition comprising: an ethylene-vinyl acetate copolymer (A); and a propylene-based resin (B),

wherein the melt flow rate (MFR: 190°C, 2.16 kg) MFR (A) of the ethylene-vinyl acetate copolymer (A) and the melt flow rate (MFR: 190°C, 2.16 kg) MFR (B) of the propylene-based resin (B) satisfy relational expression (i) below, and
wherein the resin composition has an endothermic peak at 120 to 170°C in DSC (differential scanning calorimeter) measurement and has a heat of fusion of 15 to 40 mJ/mg at 120 to 170°C:

$$4 \text{ g/10 min} \leq \text{MFR (A)} - \text{MFR (B)} \leq 35 \text{ g/10 min.} \qquad (i)$$

[2] The resin composition according to [1], further comprising a polyamide resin (C).
[3] The resin composition according to [2], wherein the content of the ethylene-vinyl acetate copolymer (A), the content of the propylene-based resin (B), and the content of the polyamide resin (C) are the ethylene-vinyl acetate copolymer (A): 25 to 38% by mass, the propylene-based resin (B): 47 to 60% by mass, and the polyamide resin (C): 2 to 15% by mass (provided that the sum of the content of the ethylene-vinyl acetate copolymer (A), the content of the propylene-based resin (B), and the content of the polyamide resin (C) is 100% by mass).
[4] The resin composition according to any one of [1] to [3], wherein light absorbance in a wavelength range of 220 to 350 nm is 0.2 or less in a UV spectrum test described in The Japanese Pharmacopoeia Seventeenth Edition, General Tests, 7.02 Test Methods for Plastic Containers, Extractable substances.
[5] The resin composition according to any one of [1] to [4], wherein the resin composition is a resin composition for dielectric heat welding.
[6] A film formed of the resin composition according to any one of claims [1] to [5].
[7] A multilayer body prepared by stacking the film according to [6] on a substrate.
[8] A packaging bag for medical use that uses the film according to [6].
[9] A packaging bag for medical use that uses the multilayer body according to [7].
[10] A resin composition for dielectric heat welding, comprising: an ethylene-vinyl acetate copolymer (A) satisfying conditions (A-i) to (A-ii) below; and a propylene-based resin (B) satisfying conditions (B-i) to (B-ii) below:

(A-i) a melt flow rate (MFR: 190°C, 2.16 kg) is 7 to 50 g/10 min;
(A-ii) the content of a constitutional unit derived from vinyl acetate is 25 to 45% by mass;
(B-i) a melt flow rate (MFR: 190°C, 2.16 kg) is 0.05 to 6.5 g/10 min; and
(B-ii) a value obtained by multiplying the heat of fusion of the propylene-based resin (B) determined from an integral value at -10 to 200°C using a DSC (differential scanning calorimeter) by the content of the propylene-based resin (B) among resin components contained in the resin composition for dielectric heat welding (when the propylene-based resin (B) comprises two or more propylene-based resins (B), the sum of values obtained by multiplying the heats of fusion of the two or more propylene-based resins (B) by the contents thereof) is 15 to 40 mJ/mg.

[11] The resin composition for dielectric heat welding according to [10], further comprising a polyamide resin (C).
[12] The resin composition for dielectric heat welding according to [11], wherein the content of the ethylene-vinyl acetate copolymer (A), the content of the propylene-based resin (B), and the content of the polyamide resin (C) are the ethylene-vinyl acetate copolymer (A): 25 to 38% by mass, the propylene-based resin (B): 47 to 60% by mass, and the polyamide resin (C): 2 to 15% by mass (provided that the sum of the content of the ethylene-vinyl acetate copolymer (A), the content of the propylene-based resin (B), and the content of the polyamide resin (C) is 100% by mass).
[13] The resin composition for dielectric heat welding according to any of [10] to [12], wherein light absorbance in a wavelength range of 220 to 350 nm is 0.2 or less in a UV spectrum test described in The Japanese Pharmacopoeia Seventeenth Edition, General Tests, 7.02 Test Methods for Plastic Containers, Extractable substances.
[14] A film formed of the resin composition for dielectric heat welding according to any of [10] to [13].
[15] A multilayer body prepared by stacking the film according to [14] on a substrate.
[16] A packaging bag for medical use that uses the film according to [14].
[17] A packaging bag for medical use that uses the multilayer body according to [15].

Advantageous Effects of Invention

The present invention can provide a polyolefin-based resin composition that can improve the drawbacks of PVC such as heat resistance. The resin composition can be welded to PVC by dielectric heat welding that is a representative processing method for PVC, allows films or sheets and also a sheet and a tube to be easily welded together by dielectric heat welding, and has low UV absorbance.
The resin composition of the present invention has good weldability to PVC using a high-frequency welder, a high capability to weld layers of the resin composition together using the high-frequency welder, high heat resistance, and low UV absorbance. Therefore, a film formed of the resin composition of the present invention or a multilayer body including the film can be suitably used for packaging bags for medical use such as infusion bags and tubes, bags for blood-related materials (e.g., blood plasma bags), and blood circuit tubes.

Description of Embodiments

The present invention will next be described in detail.
The following describes examples of embodiments of the present invention, and the present invention is not limited to the details of the following description so long as the invention does not depart from the scope thereof. The present invention can be embodied in various modified forms without departing from the scope of the invention.
In the present invention, an expression including "to" between numerical values or physical property values is used to indicate a range including these values sandwiching "to" therebetween.
In the present description, the term "sheet" is synonymous with the term "film." A film having a relatively large thickness is referred to as a sheet, and the term "film" is intended to encompass a sheet.
In the following description, a "film" may be a "sheet," and a "sheet" may be a "film."

[Resin composition]

The resin composition of the present invention contains an ethylene-vinyl acetate copolymer (A) and a propylene-based resin (B), and the melt flow rate (MFR: 190°C, 2.16 kg) MFR (A) of the ethylene-vinyl acetate copolymer (A) and the melt flow rate (MFR: 190°C, 2.16 kg) MFR (B) of the propylene-based resin (B) satisfy relational expression (i) below. The resin composition has an endothermic peak at 120 to 170°C as measured using a DSC (differential scanning calorimeter), and the heat of fusion at 120 to 170°C is 15 to 40 mJ/mg.

$$4 \text{ g/10 min} \leq \text{MFR (A)} - \text{MFR (B)} \leq 35 \text{ g/10 min} \qquad (i)$$

In the present invention, the melt flow rate (MFR) of each of the ethylene-vinyl acetate copolymer (A) and the propylene-based resin (B) is a value measured at a measurement temperature of 190°C and a measurement load of 2.16 kg according to JIS K7210.

To allow the resin composition to have dielectric heat weldability and heat resistance in a balanced manner, it is preferable that the resin composition has a matrix-domain structure in which the EVA (A) serves as the matrix and the propylene-based resin (B) serves as the domains. The resin composition is a multicomponent composition containing the EVA (A) and the propylene-based resin (B). In this case, by setting the difference between the MFR (A) of the EVA (A) and the MFR (B) of the propylene-based resin (B) to 4 to 35 g/10 min, the domains of the propylene-based resin (B) can be finely dispersed in the matrix of the EVA (A), and the matrix/domain phase structure can be stably controlled.

By setting the difference between the MFR (A) of the EVA (A) and the MFR (B) of the propylene-based resin (B) to 4 g/10 min or more, the matrix/domain structure including the EVA (A) and the propylene-based resin (B) can be stably controlled. For example, even when a shear rate necessary for molding is applied during the molding, the molding can be performed without phase inversion.

By setting the difference between the MFR (A) of the EVA (A) and the MFR (B) of the propylene-based resin (B) to 35 g/10 min or less, the fine domains of the propylene-based resin (B) can be easily dispersed uniformly in the matrix formed of the EVA (A).

From the above points of view, the difference between the MFR (A) of the EVA (A) and the MFR (B) of the propylene-based resin (B) is preferably 16 to 35 g/10 min, more preferably 20 to 35 g/10 min, and still more preferably 25 to 35 g/10 min.

The MFR of a blend of resins having different MFR values can be computed using the following formula (ii).

$$\log (\text{MFR of blend}) = w1 \log(\text{MFR1}) + w2 \log(\text{MFR2}) + \ldots + wi$$

$$\log (\text{MFRi}) + \ldots + wn \log (\text{MFRn}) \qquad (ii)$$

In formula (ii), wi is the weight fraction of component i, and MFRi is the MFR of component i. n is the total number of components in the blend. w1 + w2 +...+ wi +...+ wn = 1 holds.

The MFR (A) of a plurality of ethylene-vinyl acetate copolymers (A) when the resin composition contains the plurality of ethylene-vinyl acetate copolymers (A) and the MFR (B) of a plurality of propylene-based resins (B) when the resin composition contains the plurality of propylene-based resins (B) may be computed using formula (ii) above or may be based on measured values.

The resin composition of the present invention has at least one endothermic peak at 120 to 170°C in DSC measurement, and the heat of fusion at 120 to 170°C is 15 to 40 mJ/mg.

When the resin composition has an endothermic peak in the above range, good heat resistance is obtained, and the resin composition is suitably used for applications that require a heating step such as sterilization. Preferably, the resin composition has an endothermic peak at 120 to 165°C.

When the heat of fusion of the resin composition is in the above range, the resin composition can have heat resistance and dielectric heat weldability in a balanced manner. The heat of fusion of the resin composition is preferably 18 to 38 mJ/mg, more preferably 22 to 35 mJ/mg, and still more preferably 25 to 35 mJ/mg.

[DSC (differential scanning calorimetry)]

In the present invention, the endothermic peak of the resin composition and its heat of fusion are measured using DSC6220 (manufactured by Seiko Instrument Inc.) according to the following procedure.

First, about 5.0 mg of a sample is placed in a sample container made of aluminum to set the sample. Next, the sample is heated from 40°C to 260°C at 10°C/min in a nitrogen atmosphere. When the temperature has reached 260°C, the sample is held at 260°C for 3 minutes to erase thermal history. Next, the sample is cooled from 260°C to -10°C at 10°C/min and is held at -10°C for 3 minutes. Then the sample is again heated from -10°C to 260°C at 10°C/min. A DSC curve during the second heating is selected, and the endothermic peak temperature during the second heating is analyzed using an analysis program in TA7000 (manufactured by Seiko Instrument Inc.). The amount of the endothermic heat of the endothermic peak at 120 to 170°C during the second heating is used as the heat of fusion.

Preferably, the ethylene-vinyl acetate copolymer (A) used for the resin composition for dielectric heat welding according to the present invention satisfies conditions (A-i) to (A-ii) below, and the propylene-based resin (B) used for the resin composition satisfies conditions (B-i) to (B-ii) below. Preferably, the resin composition further contains a polyamide resin (C).

(A-i) The melt flow rate (MFR: 190°C, 2.16 kg) is 7 to 50 g/10 min.
(A-ii) The content of a constitutional unit derived from vinyl acetate (hereinafter may be referred to as "vinyl acetate content") is 25 to 45% by mass.
(B-i) The melt flow rate (MFR: 190°C, 2.16 kg) is 0.05 to 6.5 g/10 min.
(B-ii) A value obtained by multiplying the heat of fusion of the propylene-based resin (B) determined from an integral value at -10 to 200°C in the DSC (this value may be hereinafter referred to simply as "the heat of fusion") by the content of the propylene-based resin (B) among the resin components contained in the resin composition for dielectric heat welding (when two or more propylene-based resins (B) are contained, the sum of values obtained by multiplying the heats of fusion of the propylene-based resins (B) by their contents) (the above value may be hereinafter referred to as "the heat of fusion due to the propylene-based resin (B) in the resin composition for dielectric heat welding") is 15 to 40 mJ/mg.

[Mechanism]

Resins usable for dielectric heat welding using a high-frequency welder etc. are limited. Among polyolefin-based resins, EVA is known to be weldable. To broaden the conditions for welding, it is preferable to use an EVA with a high vinyl acetate content. However, the EVA with a high vinyl acetate content has poor heat resistance, and the EVA alone cannot be used for applications that require heat resistance such as applications including, for example, a sterilization step.

Examples of polyolefins having good heat resistance include propylene-based resins. However, since the propylene-based resins are nonpolar, they cannot be dielectric heat-welded using a high-frequency welder etc.

Known examples of a material weldable using a high-frequency welder etc. and having sufficient heat resistance include ester-based resins and urethane-based resins. However, the absorbance of these resins in the UV test according to the Japanese Pharmacopoeia is high, and these resins cannot be used for applications that are contingent on passing the UV test.

To allow the resin composition of the present invention to have dielectric heat weldability and heat resistance in a balanced manner and to reduce the UV absorbance, it is preferable that the resin composition contains, as essential components, a specific EVA (A) that is a material compatible with dielectric heat welding and a specific propylene-based resin (B) for improving the heat resistance. Specifically, when the specific EVA (A) serves as a matrix and the specific propylene-based resin (B) is present as domains, the dielectric heat weldability and the heat resistance are easily balanced.

As described above, in the present invention, to obtain the dielectric heat weldability and the heat resistance simultaneously, the EVA (A) and the propylene-based resin (B) that satisfy the specific conditions are used. However, there is a tradeoff between the weldability and the heat resistance. Specifically, when the heat resistance is increased, the resin composition is not easily melted, and the dielectric heat weldability deteriorates.

To obtain higher dielectric heat weldability and heat resistance in a balanced manner, it is necessary to apply heat capable of melting a material having improved heat resistance.

The electric power generated by a high-frequency welder is proportional to the loss factor of a material that is the product of its dielectric constant and its dielectric loss angle. As the loss factor increases, the electric power generated by the high-frequency welder increases. Specifically, the high-frequency weldability is improved.

The present inventor has further conducted extensive studies based on the above findings and found that the addition of a small amount of a polyamide resin (C) having a high loss factor to the high-heat resistant material allows even the high-heat resistant material to be melted, so that the heat resistance can be improved while the dielectric heat weldability is maintained. The inventor has also found that, although the polyamide resin (C) alone exhibits high absorbance in the UV test according to The Japanese Pharmacopoeia, the addition of a small amount of the polyamide resin (C) has no influence on the UV absorbance.

Therefore, the resin composition of the present invention contains, in addition to the EVA (A) and the propylene-based resin (B), the polyamide resin (C), and this allows the dielectric heat weldability and the heat resistance to be well balanced.

[Ethylene-vinyl acetate copolymer (A)]

In the EVA (A) used in the present invention, the content of vinyl acetate is preferably 25 to 45% by mass, and the vinyl acetate content is more preferably 26 to 43% by mass and still more preferably 28 to 40% by mass. When the vinyl acetate content is equal to or more than the above lower limit, dielectric heat welding can be used, and the compatibility with the propylene-based resin (B) is sufficiently high, so that the mechanical strength required for the dielectric heat weldable resin composition is obtained. Specifically, when sheets and films produced are used for packaging bags, the bags can be prevented from breaking. When the vinyl acetate content is equal to or lower than the above upper limit, the crystallinity of the EVA can be maintained, and sufficient heat resistance is obtained, so that the resin composition can be suitably used for applications that require heat resistance in, for example, a sterilization step.

The vinyl acetate content means the mass ratio of a constitutional unit derived from vinyl acetate to constitutional units derived from all the monomers included in the ethylene-vinyl acetate copolymer (including "an additional copolymer component" described later). The vinyl acetate content includes the content of a constitutional unit that forms the same chemical structure as that of the constitutional unit derived from vinyl acetate and that is obtained by, for example, modification after polymerization that does not use the vinyl acetate monomer as a polymerizable monomer.

In the present invention, the vinyl acetate content of the EVA (A) means a value measured using a Fourier transform infrared spectrophotometer according to JIS K 7192 (1999).

The EVA (A) may be a saponified product of an ethylene-vinyl acetate copolymer and may further contain, in addition to ethylene and vinyl acetate, a constitutional unit derived from an additional copolymerizable component. No limitation is imposed on the additional copolymerizable component, and the additional copolymerizable component may be, for example, one or two or more from among $\alpha$-olefins having about 3 to about 20 carbon atoms such as propylene, 1-butene, 3-methyl-1-butene, 1-pentene, 4-methyl-1-pentene, 1-hexene, 1-octene, and 1-decene, (meth)acrylic acid, and (meth)acrylates. When the EVA (A) contains the constitutional unit derived from the additional copolymerizable component, its content is preferably equal to or less than 45% by mass of the total mass of the constitutional units included in the EVA (A).

The melt flow rate (MFR: 190°C, 2.16 kg) of the EVA (A) used in the present invention is preferably 7 to 50 g/10 min, more preferably 7.5 to 45 g/10 min, and still more preferably 8 to 40 g/10 min. The MFR is preferably equal to or more than the above lower limit because the difference in MFR between the EVA (A) and the propylene-based resin (B) falls within a desired range and therefore the phase structure can be easily controlled such that the EVA (A) is present as a matrix. Moreover, weldability using a high-frequency welder is improved. It is preferable that the MFR is equal to or lower than the above upper limit from the viewpoint formability into sheets and films.

The resin composition of the present invention may contain only one EVA (A) or may contain two or more EVAs (A) that differ in vinyl acetate content, other physical properties, etc.

[Propylene-based resin (B)]

The propylene-based resin (B) used in the present invention includes a constitutional unit derived from propylene, and the content thereof based on the mass of all the constitutional units is preferably 50% by mass or more and more preferably 60 to 100% by mass.

Examples of the propylene-based resin (B) include general propylene homopolymers, low-tacticity propylene homopolymers with controlled tacticity, and propylene-based copolymers such as propylene-$\alpha$-olefin copolymers ($\alpha$-olefins are $\alpha$-olefins in a broad sense including ethylene). Examples of the $\alpha$-olefins include ethylene, 1-butene, 1-pentene, 4-methyl-1-pentene, 1-heptene, 1-hexene, 1-octene, and 1-nonene. One $\alpha$-olefin may be used, or a plurality of $\alpha$-olefins may be used. The propylene-based copolymer may be a random copolymer or a block copolymer.

The melt flow rate (MFR: 190°C, 2.16 kg) of the propylene-based resin (B) used in the present invention is preferably 0.05 to 6.5 g/10 min, more preferably 0.5 to 6 g/10 min, and still more preferably 0.8 to 5.5 g/10 min. The MFR is preferably equal to or more than the above lower limit because the propylene-based resin (B) can be sufficiently dispersed in the EVA (A) and good formability into sheets or films is obtained. The MFR is preferably equal to or lower than the above upper limit because the phase structure can be easily controlled such that the EVA (A) is present as a matrix and good weldability using a high-frequency welder can be easily obtained.

In the present invention, the propylene-based resin (B) is used such that the heat of fusion due to the propylene-based resin (B) in the resin composition is preferably 15 to 40 mJ/mg, more preferably 18 to 38 mJ/mg, and still more preferably 22 to 35 mJ/mg.

When the heat of fusion due to the propylene-based resin (B) in the resin composition is equal to or more than the above lower limit, sufficient heat resistance is imparted to the resin composition. The heat of fusion due to the propylene-based resin (B) in the resin composition is preferably equal to or lower than the above upper limit because the heat resistance can be maintained in a preferred range and welding using a high-frequency welder can be easily performed.

The heat of fusion of the propylene-based resin (B) is measured and computed using a method described later in Examples. When the resin composition contains two or more propylene-based resins (B), the heat of fusion is a value computed using the heats of fusion of the propylene-based resins (B) and their contents.

For example, when Q% by mass of one propylene-based resin (B) with a heat of fusion of M mJ/mg is contained with respect to 100% by mass of all the resin components (the resin components are not limited to resins and intended to mean the total of polymer components such as elastomers) contained in the resin composition, the heat of fusion due to the propylene-based resin (B) in the resin composition is computed as (M $\times$ Q/100) mJ/mg.

When $Q_1$% by mass of a propylene-based resin (B) with a heat of fusion of $M_a$ mJ/mg and $Q_2$% by mass of another propylene-based resin (B) with a heat of fusion of $M_b$ mJ/mg are contained with respect to 100% by mass of all the resin components contained in the resin composition, the heat of fusion due to the propylene-based resins (B) in the resin composition is computed as ($M_a \times Q_1/100 + M_b \times Q_2/100$) mJ/mg.

The same applies to the case where three or more propylene-based resins (B) are contained.

The resin composition of the present invention may contain only one propylene-based resin (B) or may contain a plurality of propylene-based resins (B)having different copolymer compositions, different physical properties, etc.

[Polyamide resin (C)]

When the resin composition of the present invention contains the polyamide resin (C) in addition to the EVA (A) and the propylene-based resin (B) as described above, the dielectric heat weldability and the heat resistance can be improved in a highly balanced manner. Therefore, preferably, the resin composition of the present invention further contains the polyamide resin (C).

Any type of polyamide resin (C) can be used so long as it is a polymer composed of a large number of monomer molecules bonded through amide bonds. Examples of the polyamide resin (C) used in the present invention include polyamide 6, polyamide 11, polyamide 12, polyamide 66, polyamide 610, polyamide 6T, polyamide 6I, polyamide M5T, polyamide 612, polyamide 46, and polyamide-based thermoplastic elastomers such as "Pebax" manufactured by ARKEMA and "VESTAMID" manufactured by Daicel-Evonik Ltd. Of these, polyamide 6 and polyamide 66 are preferred because of their high versatility, and polyamide 6 is particularly preferable. Only one polyamide resin (C) may be used, or two or more polyamide resins (C) may be used.

[Contents]

As for the content of the EVA (A) and the content of the propylene-based resin (B) in the resin composition of the present invention, the content of the EVA (A) based on 100% by mass of the total of them is preferably 25 to 45% by mass, more preferably 27 to 43% by mass, and still more preferably 30 to 40% by mass. When the content of the EVA (A) is equal to or more than the above lower limit, good dielectric heat weldability is obtained. When the content of the EVA (A) is equal to or lower than the above upper limit, good heat resistance is obtained, and the resin composition can be used for applications including a sterilization step etc.

Preferably, the propylene-based resin (B) is used such that the above-described heat of fusion due to the propylene-based resin (B) in the resin composition, which is computed in connection with the heat of fusion of the propylene-based resin (B), is satisfied. In the resin composition of the present invention, the content of the propylene-based resin (B) based on 100% by mass of the total of the EVA (A) and the propylene-based resin (B) is preferably 55 to 75% by mass, more preferably 57 to 73% by mass, and still more preferably 60 to 70% by mass. When the content of the propylene-based resin (B) is equal to or more than the above lower limit, the effect of imparting the heat resistance by the propylene-based resin (B) can be obtained sufficiently, and the resin composition can be used for applications including a sterilization step etc. When the content of the propylene-based resin (B) is equal to or less than the above upper limit, the content of the EVA (A) is sufficient, and excellent dielectric heat weldability can be obtained.

When the resin composition of the present invention contains the polyamide resin (C) in addition to the EVA (A) and the propylene-based resin (B), the contents of the EVA (A), the propylene-based resin (B), and the polyamide resin (C) in the resin composition based on 100% by mass of the total of them are as follows. Preferably, the content of the EVA (A), the content of the propylene-based resin (B), and the content of the polyamide resin (C) are 25 to 38% by mass, 47 to 60% by mass, and 2 to 15% by mass, respectively. More preferably, the content of the EVA (A), the content of the propylene-based resin (B), and the content of the polyamide resin (C) are 27 to 36% by mass, 50 to 56% by mass, and 6 to 12% by mass, respectively.

The content of the EVA (A) and the content of the propylene-based resin (B) are as described above.

When the content of the polyamide resin (C) is equal to or more than the above lower limit, the dielectric heat weldability can be improved, provided that the amount of heat applied is sufficient for melting the resin composition with improved heat resistance. When the content of the polyamide resin (C) is equal to or lower than the above upper limit, an increase in the absorbance in the UV test is prevented, and the resin composition can also be used for applications that are contingent on passing the UV test according to The Japanese Pharmacopoeia.

[Other additional components]

Any optional components other than the EVA (A), the propylene-based resin (B), the polyamide resin (C) may be added to the resin composition of the present invention, so long as the object and effects of the present invention are not impaired.

Specific examples of the additional components include: additional resins such as ethylene-α-olefin copolymer resins used as resin components other than the EVA (A), the propylene-based resin (B), and the polyamide resin (C); and elastomers such as styrene-based elastomers used as rubber components.

When the resin composition of the present invention contains a rubber component or an additional resin component other than the EVA (A), the propylene-based resin (B), and the polyamide resin (C), the content thereof is preferably 80% by mass or less based on 100% by mass of the total of the EVA (A), the propylene-based resin (B), the polyamide resin (C), and the additional resin component or the rubber component in order to obtain the effects of the invention reliably.

The resin composition of the present invention may further contain any of various additives such as fillers, e.g., talc, calcium carbonate, mica, and glass fibers, plasticizers, e.g., paraffin oil, antioxidants, thermal stabilizers, light stabilizers, ultraviolet absorbers, neutralizing agents, lubricants, antifogging agents, antiblocking agents, slipping agents, crosslinking agent, coagents, coloring agents, flame retardants, dispersants, antistatic agents, antimicrobial agents, and fluorescent brightening agent. In particular, it is preferable to add at least one of various antioxidants such as phenol-based, phosphite-based, thioether-based, and aromatic amine-based antioxidants.

[Method for producing resin composition]

The resin composition of the present invention can be obtained by mixing the above-described components at a prescribed ratio.

No particular limitation is imposed on the mixing method so long as the raw material components are dispersed uniformly. Specifically, by mixing the above raw material components simultaneously or in any order, a composition in which the components are dispersed uniformly is obtained.

To mix and disperse the above raw material components more uniformly, it is preferable to melt-mix prescribed amounts of the raw material components. For example, the raw material components of the resin composition of the present invention may be mixed in any order and then heated, or all the raw material components may be gradually melted and mixed. Alternatively, a mixture of the raw material components may be pelletized, or the raw material components may be melt-mixed during forming when a target formed article is produced.

Specifically, the resin composition of the present invention can be prepared by a method including mixing prescribed amounts of the above raw material components using any of various known techniques such as a tumbler blender, a V blender, a ribbon blender, and a Henschel mixer, then melt-kneading the mixture using a single screw extruder, a twin screw extruder, a Banbury mixer, or a kneader, and granulating or pulverizing the resulting mixture. It is only necessary that the temperature during melt kneading be a temperature at which at least one of the raw material components melts. Generally, a temperature at which all the raw material components melt is selected as the temperature during the melt kneading, and the melt kneading is generally performed in the range of 150 to 300°C.

[Method for producing film/sheet using resin composition and method for producing multilayer body]

No particular limitation is imposed on the method for producing a film/sheet using the resin composition of the present invention and the method for producing a multilayer body, and any of various known methods may be used for the production. Examples of the method that can be used include various molding methods such as an extrusion molding method, a coextrusion molding method, an inflation molding method, a blow molding method, a rotational molding method, a press forming method, and injection molding methods (an insert injection molding method, a two-color injection molding method, a core-back injection molding method, a sandwich injection molding method, and an injection press forming method). Of these, the extrusion molding method or the coextrusion molding method is preferable because the good heat weldability and workability of the resin composition of the present invention can be effectively utilized, so that the productivity can be improved.

[Film]

The film of the present invention that is formed of the resin composition of the present invention has good PVC weldability using a high-frequency welder and high capability to weld films or a film and a tube together using the high-frequency welder and also has high heat resistance and low UV absorbance. Therefore, the film of the present invention is useful as, for example, a material forming packaging bags for medical use such as infusion bags and tubes, bags for blood-related materials (such as blood plasma bags), and blood circuit tubes.

No particular limitation is imposed on the thickness of the film of the present invention that is formed of the resin composition of the present invention for dielectric heat welding, and the thickness of the film depends on the mode of use and is generally about 50 to about 800 μm.

[Multilayer body]

The multilayer body of the present invention is produced by stacking the film of the present invention that is formed of the resin composition of the present invention on a substrate.

No particular limitation is imposed on the substrate used.

Since the resin composition of the present invention has good PVC weldability using a high-frequency welder, it is preferable to use a substrate formed of PVC.

The substrate used is preferably a substrate formed of polyolefin or a substrate formed of polyolefin and an elastomer because of their good low-temperature shock resistance.

No limitation is imposed on the PVC forming the substrate of the multilayer body of the present invention, and the PVC may be a vinyl chloride homopolymer or a vinyl chloride copolymer. No limitation is imposed on the monomer copolymerizable with vinyl chloride, and the monomer may be, for example, ethylene, propylene, acrylonitrile, vinyl acetate, maleic acid or an ester thereof, acrylic acid or an ester thereof, methacrylic acid or an ester thereof, or vinylidene chloride. The PVC may be a partially crosslinked resin. The PVC used may be a polymer blend of a polyvinyl chloride resin, for example, a polymer blend of a polyvinyl chloride resin and polyvinylidene chloride. Of these, a vinyl chloride homopolymer is preferable for the polyvinyl chloride resin used for the PVC substrate.

No limitation is imposed on the average degree of polymerization of the PVC used for the PVC substrate, but the average degree of polymerization of the PVC is generally 500 to 6000 and particularly preferably 800 to 3000. No limitation is imposed on the reduced viscosity (K value) of the PVC. The value of the reduced viscosity according to JIS K 7367-2 is generally 50 to 110 and particularly preferably 60 to 90.

No limitation is imposed on the method for producing the PVC, and the PVC can be produced using, for example, a suspension polymerization method, a bulk polymerization method, or an emulsion polymerization method. A plastisol prepared by dispersing fine PVC particles in an organic medium or an aqueous latex may be used.

Preferably, the PVC used for the PVC substrate contains a plasticizer.

No limitation is imposed on the plasticizer used for the PVC. Examples of the plasticizer include: phthalic acid esters having an alkyl group having 1 to 12 carbon atoms such as dimethyl phthalate, diethyl phthalate, dibutyl phthalate, diheptyl phthalate, di-2-ethylhexyl phthalate, di-n-octyl phthalate, diisodecyl phthalate, butyl benzyl phthalate, diisononyl phthalate, ethyl phthalyl ethyl glycolate, diundecyl phthalate, ditridecyl phthalate, didodecyl phthalate, diisocumyl phthalate, and dinonyl phthalate; fatty acid esters such as diisobutyl adipate, dibutyl adipate, di-2-ethylhexyl adipate, diisodecyl adipate, dibutyl diglycol adipate, di-2-ethylhexyl azelate, dihexyl azelate, diisooctyl azelate, triethyl citrate, acetyl triethyl citrate, tributyl citrate, acetyl tributyl citrate, acetyl trioctyl citrate, dimethyl sebacate, dibutyl sebacate, di-2-ethylhexyl sebacate, methyl acetyl ricinoleate, and butyl acetyl ricinoleate; aromatic carboxylic acid esters such as tri-(2-ethylhexyl)trimellitate, tri-n-octyl·trimellitate, triisooctyl·trimellitate, tetra-(2-ethylhexyl)pyromellitate, tetra-n-octyl·pyromellitate, triisooctyl·pyromellitate, biphenyltetracarboxylic acid tetrabutyl ester, biphenyltetracarboxylic acid tetrapentyl ester, and biphenyltetracarboxylic acid tetrahexyl ester; orthophosphoric acid esters such as tri-2-ethylhexyl phosphate, tributoxyethyl phosphate, trioleyl phosphate, triphenyl phosphate, tricresyl phosphate, trixylenyl phosphate, cresyl diphenyl phosphate, xylenyl diphenyl phosphate, and 2-ethylhexyl diphenyl phosphate; chlorinated paraffin; chlorinated fatty acid esters; epoxidized soybean oil; epoxidized linseed oil; epoxybutyl stearate and epoxyoctyl stearate; and methyl phthalyl ethyl glycolate, ethyl phthalyl ethyl glycolate, and butyl phthalyl butyl glycolate. Only one of these plasticizer compounds may be used, or two or more compounds may be used in combination.

No limitation is imposed on the amount of the plasticizer used. The amount of the plasticizer added is generally 1 to 150 parts by mass, preferably 15 to 120 parts by mass, and more preferably 20 to 100 parts by mass based on 100 parts by mass of the PVC. When the amount of the plasticizer added is equal to or more than the above lower limit, the flexibility of the multilayer body of the present invention tends to be good. When the amount of the plasticizer added is equal to or lower than the above upper limit, bleedout of the plasticizer from the multilayer body of the present invention is prevented, and formability is also improved.

The PVC used for the PVC substrate may contain a stabilizer.

No limitation is imposed on the stabilizer used for the PVC. The stabilizer can be appropriately selected from known stabilizers for PVC etc. Examples of the stabilizer include tribasic lead sulfate, dibasic lead phthalate, lead silicate, lead orthosilicate-silica gel coprecipitate, dibasic lead stearate, cadmium-barium-based stabilizers, barium-zinc-based stabilizers, calcium-zinc-based stabilizers, tin-based stabilizers, and stabilizers such as hydrotalcite that contain inorganic salts such as magnesium, aluminum, and silicon salts as main components. Only one of these stabilizer compounds may be used, or two or more compounds may be used in combination.

No limitation is imposed on the amount of the stabilizer used. The amount of the stabilizer added is generally 1 to 30 parts by mass, preferably 2 to 20 parts by mass, and more preferably 3 to 15 parts by mass based on 100 parts by mass of the PVC. When the stabilizer is added in an amount within the above range, thermal stability and formability tend to be improved.

No particular limitation is imposed on the polyolefin or the polyolefin and the elastomer forming the substrate of the multilayer body of the present invention. The polyolefin contained is preferably one or both of polypropylene and polyethylene in terms of the balance between heat resistance and flexibility. The elastomer contained is preferably one or both of an ethylene-based elastomer and a styrene-based elastomer.

The polypropylene may be a propylene homopolymer, a propylene-$\alpha$-olefin random copolymer, or a propylene-$\alpha$-olefin block copolymer. In terms of the balance between heat resistance and flexibility, the polypropylene is preferably a propylene-$\alpha$-olefin random copolymer or a propylene-$\alpha$-olefin block copolymer and more preferably a propylene-$\alpha$-olefin block copolymer.

The polyethylene may be a high-density polyethylene, a linear low-density polyethylene, or a low-density polyethylene. In terms of the balance between heat resistance and flexibility, the polyethylene is preferably a linear low-density polyethylene or a low-density polyethylene and more preferably a linear low-density polyethylene.

From the viewpoint of imparting flexibility and low-temperature shock resistance, the ethylene-based elastomer is preferably a very low-density linear polyethylene-based elastomer composed of ethylene and $\alpha$-olefin. The $\alpha$-olefin in the ethylene-based elastomer may be any of propylene, butene, hexene, and octene. The density of the ethylene-based elastomer is preferably 0.860 to 0.910 $g/cm^3$ and more preferably 0.865 to 0.900 $g/cm^3$.

From the viewpoint of imparting flexibility and low-temperature shock resistance, it is preferable that the styrene-based elastomer includes a styrene polymer block and a hydrogenated block of a conjugated diene. The content of the styrene polymer block in the styrene-based elastomer is preferably 5 to 40% by mole% by mole and more preferably 8 to 30% by mole.

When a mixture of the polyolefin and the elastomer is used for the substrate, no particular limitation is imposed on the contents thereof. In terms of the balance between heat resistance and flexibility, the contents of the polyolefin and the elastomer are preferably 50 to 95% by mass and 5 to 50% by mass, respectively, and more preferably 55 to 90% by mass and 10 to 45% by mass, respectively.

Other additional components such as the EVA (A) and the polyamide resin (C) may be optionally added to the substrate.

No particular limitation is imposed on the thickness of the substrate. The thickness depends on the intended application and the mode of use and is generally about 50 to about 5000 $\mu$m.

The multilayer body including the substrate and the film of the present invention can be produced, for example, by dielectric heat-welding the film of the present invention to the substrate using a high-frequency welder. Alternatively, the multilayer body including the substrate and the film of the present invention can be produced, for example, by heat-sealing the film of the present invention to the substrate.

[Packaging bags for medical use]

The film of the present invention or the multilayer body of the present invention has good dielectric heat weldability using a high-frequency welder. By dielectric heat-welding the films of the present invention together, the films can be easily formed into a desired shape.

The film of the present invention or the multilayer body of the present invention has good heat resistance and low UV absorbance and is therefore useful for packaging bags for medical use such as infusion bags and tubes, bags for blood-related materials (such as blood plasma bags), and blood circuit tubes.

The film of the present invention or the multilayer body of the present invention is preferably used even for blood plasma bag applications in which the blood plasma is frozen and stored at -20°C or lower and thawed in warm water before use because the film or the multilayer body is unlikely to break even in this case.

[EXAMPLES]

The present invention will be described more specifically by way of Examples and Comparative Examples. However, the present invention is not limited to the following Examples so long as they fall within the scope of the invention. Various production conditions and the values of evaluation results in the following Examples have meanings as preferred upper or lower limits in the embodiments of the present invention, and preferred ranges may be ranges defined by combinations of the above-described upper or lower limit values and values in the following Examples or combinations of the values in the following Examples.

[Raw materials used]

Raw materials used in the following Examples and Comparative Examples are as follows.

<EVA (A)>

- EVA (A-1): Product name "EVAFLEX EV150" manufactured by Dupont-Mitsui Polychemicals Co., Ltd.

  MFR (190°C, 2.16 kg): 30 g/10 min
  Vinyl acetate content: 33% by mass

- EVA (A-2): Product name "EVAFLEX EV260" manufactured by Dupont-Mitsui Polychemicals Co., Ltd.

  MFR (190°C, 2.16 kg): 6 g/10 min
  Vinyl acetate content: 28% by mass

- EVA (A-3): Product name "EVAFLEX EV270" manufactured by Dupont-Mitsui Polychemicals Co., Ltd.

  MFR (190°C, 2.16 kg): 1 g/10 min
  Vinyl acetate content: 28% by mass

<Propylene-based resin (B)>

- Propylene-based resin (B-1): Product name "TAFMER PN9060" manufactured by Mitsui Chemicals, Inc.

  MFR (190°C, 2.16 kg): 3 g/10 min
  Heat of fusion: 15 mJ/mg

- Propylene-based resin (B-2): Product name "WELNEX RFG4VM" manufactured by Japan Polypropylene Corporation

  MFR (190°C, 2.16 kg): 3 g/10 min
  Heat of fusion: 40 mJ/mg

- Propylene-based resin (B-3): Product name "ZELAS 7025" manufactured by Mitsubishi Chemical Corporation

  MFR (190°C, 2.16 kg): 0.8 g/10 min
  Heat of fusion: 63 mJ/mg

- Propylene-based resin (B-4): The propylene-based resin (B-4) was obtained by preparing 100 parts by mass of "WELNEX RFG4VM (product name)" manufactured by Japan Polypropylene Corporation and 0.04 parts by mass of "PERHEXA 25B (product name)" manufactured by NOF CORPORATION, mixing them, then melt-kneading the mixture using a single screw extruder (screw diameter: 50 mm, temperature: 230°C, ejection amount: 25 kg/hour), extruding the resulting mixture from a die into a strand form, and cutting the extrudate (this resin is denoted as "PP-1" in Tables 1 and 2).

The results of evaluation of the material obtained are as follows.

  MFR (190°C, 2.16 kg): 14 g/10 min
  Heat of fusion: 40 mJ/mg

- Propylene-based resin (B-5): The propylene-based resin (B-5) was obtained using the same procedure as that for the propylene-based resin (B-4) except that the amount of "PERHEXA 25B (product name)" manufactured by NOF CORPORATION was changed to 0.03 parts by mass (this resin is denoted as "PP-2" in Tables 1 and 2).

The results of evaluation of the material obtained are as follows.

  MFR (190°C, 2.16 kg): 10 g/10 min

Heat of fusion: 40 mJ/mg

<Polyamide resin (C)>

- Polyamide resin (C): Polyamide 6, product name "Novamid 1020J" manufactured by DSM

<Acrylic-based elastomer>

- Acrylic-based elastomer: Acrylic-based elastomer, product name "Kurarity LA4285" manufactured by KURARAY Co., Ltd.

[Example 1]

1) Production of resin composition sheet

An EVA (A) and a propylene-based resin (B) shown in Table 1 were used at ratios shown in Table 1 and dry-blended. A compound-sheet simultaneous forming machine obtained by combining a co-rotating fully intermeshing twin screw extruder "KZW15-45MG-NH" manufactured by TECHNOVEL CORPORATION and a single-layer T-die unit was used to obtain a single-layer sheet having a thickness of 0.5 mm (hereinafter referred to as a "weldable sheet") under the conditions of a cylinder temperature of 240°C, a screw rotation speed of 250 rpm, and a take-up speed of 1 m/min.

2) Production of polyvinyl chloride sheet

A soft vinyl chloride sheet "product No. 107-16811" manufactured by KOKUGO Co., Ltd. was subjected to compression molding at 190°C to thereby produce a PVC sheet having a thickness of 0.5 mm.

3) Presence or absence of endothermic peak of resin composition at 120 to 170°C and measurement of heat of fusion by DSC

The endothermic peak of the resin composition and its heat of fusion were measured using DSC6220 (manufactured by Seiko Instrument Inc.) according to the following procedure.
First, 5.0 mg of a sample was placed in an aluminum-made sample container to set the sample. Next, the sample was heated from 40°C to 260°C at 10°C/min in a nitrogen atmosphere. When the temperature had reached 260°C, the sample was held at 260°C for 3 minutes to erase thermal history. Next, the sample was cooled from 260°C to -10°C at 10°C/min and held at -10°C for 3 minutes. Then the sample was again heated from -10°C to 260°C at 10°C/min. A DSC curve during the second heating was selected, and the endothermic peak temperature during the second heating was determined using an analysis program in TA7000 (manufactured by Seiko Instrument Inc.). The amount of the endothermic heat of the endothermic peak at 120 to 170°C during the second heating was used as the heat of fusion.

4) Measurement of heat of fusion of propylene-based resin (B) and computation of heat of fusion due to propylene-based resin (B) in resin composition

The heat of fusion of the propylene-based resin (B) was measured using DSC6220 (manufactured by Seiko Instrument Inc.) as follows. A sample was initially heated to 200°C to erase thermal history and then cooled to -10°C at a cooling rate of 10°C/min. The sample was again heated at a heating rate of 10°C/min to measure an endothermic peak, and the integral value of the endothermic peak was determined. The unit is mJ/mg.
The heat of fusion due to the propylene-based resin (B) in the resin composition was determined by multiplying the measured heat of fusion by the content of the propylene-based resin (B).
For example, in Example 3 described later, since the propylene-based resin (B-2) having a heat of fusion of 40 mJ/mg was used in an amount of 65% by mass, $40 \times 0.65 = 26$ mJ/mg was used.
When a plurality of propylene-based resins (B) are used, the heat of fusion due to the propylene-based resins (B) in the resin composition is the sum of the heats of fusion of the propylene-based resins (B-1) to (B-3) multiplied by their respective contents. For example, in Example 1, since 45% by mass of the propylene-based resin (B-1) having a heat of fusion of 15 mJ/mg and 20% by mass of the propylene-based resin (B-3) having a heat of fusion of 63 mJ/mg were used, $15 \times 0.45 + 63 \times 0.2 = 19.35$ was used.

Values rounded to the nearest whole numbers are shown in Table 1.

5) Evaluation of weldability using high-frequency welder

5-1) Capability to weld weldable sheet to PVC sheet

The weldable sheet having a thickness of 0.5 mm and the PVC sheet having a thickness of 0.5 mm were stacked one on another and sandwiched between two Teflon sheets, and a high-frequency welder "type YPO-5" manufactured by Yamamoto Vinita Co., Ltd. was used to weld the sheets under the conditions of a current of 0.5 A, a time of 0.5 seconds, and a pressure of 0.2 MPa. When the welded sheets could be separated from each other by hand, a fail rating was given (this is denoted as NG in Tables 1 and 2). When the welded sheets could not be separated from each other by hand and any of the sheets was broken, a pass rating was given (this is denoted as OK in Tables 1 and 2).

5-2) Capability to weld weldable sheets together

Two weldable sheets having a thickness of 0.5 mm were stacked one on another and sandwiched between two Teflon sheets, and a high-frequency welder "type YPO-5" manufactured by Yamamoto Vinita Co., Ltd. was used to weld the sheets under the conditions of a current of 0.5 A, a time of 0.5 seconds, and a pressure of 0.2 MPa. When the welded sheets could be separated from each other by hand, a fail rating was given (this is denoted as NG in Tables 1 and 2). When the welded sheets could not be separated from each other by hand and any of the sheets was broken, a pass rating was given (this is denoted as OK in Tables 1 and 2).

6) Evaluation of heat resistance

Two weldable sheet having a thickness of 0.5 mm were stacked one on another and cut into 3 cm square pieces. Each cut piece was sandwiched between 350 g glass plates, and the state of the cut piece was controlled in a Geer oven at a set temperature of 70°C or 100°C for 30 minutes. After the 3 cm square sheets had been cooled, whether the sheets could be separated from each other by hand was checked. When the sheets were fused and could not be separated from each other or underwent cohesive delamination, a fail rating was given (this is denoted as NG in Tables 1 and 2). When the sheets could be separated from each other by hand and no change was found in the appearance of the separated sheets, a pass rating was given (this is denoted as OK in Tables 1 and 2).

When the heat resistance at 70°C is rated pass, the weldable sheets can be used for applications that require heat resistance in, for example, a sterilization step.

More preferably, the weldable sheets are heat resistant at 100°C because their range of application is widened.

7) Evaluation of sheet formability

Sheet formability when the single-layer sheet having a thickness of 0.5 mm was formed in 1) Production of the resin composition sheet was rated as follows. When the rating was A, B, or C, the sheet formability was judged as pass. Among the A, B, and C ratings, the rating A means that the sheet formability is highest, and the rating B means that the sheet formability is second highest. The rating C means that the sheet formability is third highest. The D rating means that the sheet formability is poor and judged as fail.

A: The sheet can be formed stably without any problems.
B: Although the sheet can be formed, its thickness is uneven in the TD (Transverse Direction).
C: Although the sheet can be formed, its thickness is uneven in the MD (Machine Direction).
D: Although the sheet can be formed, the sheet adheres to a cooling roll and cannot be formed stably.

8) Evaluation of UV absorbance

When the ratings in evaluation 5) to evaluation 7) were good, a test in "The Japanese Pharmacopoeia Seventeenth Edition, General Tests, 7.02 Test Methods for Plastic Containers, 2. Requirements for plastic containers for aqueous injections, 2.1. Polyethylene or polypropylene containers for aqueous injections, (8) Extractable substances, (iv) UV spectrum" was performed using the weldable sheet having a thickness of 0.5 mm in a test area of 1200 $cm^2$ under the extraction condition of 70°C $\times$ 24 hours. When the absorbance was 0.2 or less in the wavelength range of 220 to 350 nm, a pass rating was given (this is denoted as OK in Tables 1 and 2). When the absorbance was more than 0.2 in the wavelength range of 220 to 350 nm, a fail rating was given (this is denoted as NG in Tables 1 and 2).

[Examples 2, 3, 8, and 9]

Sheets were obtained in the same manner as in Example 1 except that an EVA (A) and a propylene-based resin (B) shown in Table 1 were used at ratios shown in Table 1, and the sheets obtained were rated in the same manner as in Example 1.

[Examples 4 to 7]

Sheets were obtained in the same manner as in Example 1 except that an EVA (A), a propylene-based resin (B), and the polyamide resin (C) shown in Table 1 were used at ratios shown in Table 1, and the sheets obtained were rated in the same manner as in Example 1.

[Comparative Example 1]

A sheet was obtained in the same manner as in Example 1 except that only the acrylic-based elastomer was used, and the sheet obtained was rated in the same manner as in Example 1.

[Comparative Examples 2 to 4]

Sheets were obtained in the same manner as in Example 1 except that an EVA (A) or a propylene-based resin (B) shown in Table 2 was used alone, and the sheets obtained were rated in the same manner as in Example 1.

[Comparative Examples 5 to 9]

Sheets were obtained in the same manner as in Example 1 except that an EVA (A) and a propylene-based resin (B) shown in Table 2 were used at ratios shown in Table 2, and the sheets obtained were rated in the same manner as in Example 1.

[Comparative Example 10]

A sheet was obtained in the same manner as in Example 1 except that the acrylic-based elastomer, an EVA (A), and a propylene-based resin (B) shown in Table 2 were used at ratios shown in Table 2, and the sheet obtained was rated in the same manner as in Example 1.

The results obtained in Examples 1 to 9 and Comparative Examples 1 to 10 above are summarized in Tables 1 and 2.

[Table 1]

| Composition | | | Unit | Example 1 | Example 2 | Example 3 | Example 4 | Example 5 | Example 6 | Example 7 | Example 8 | Example 9 |
|---|---|---|---|---|---|---|---|---|---|---|---|---|
| EVA(A) | EV150 | A-1 | % by mass | 35 | 35 | 35 | 35 | 35 | 35 | 35 | 35 | 35 |
| | EV260 | A-2 | % by mass | | | | | | | | | |
| | EV270 | A-3 | % by mass | | | | | | | | | |
| Propylene-based resin (B) | PN9060 | B-1 | % by mass | 45 | 35 | | 35 | 25 | 15 | 5 | | |
| | RFG4VM | B-2 | % by mass | | | 65 | | | | | | |
| | 7025 | B-3 | % by mass | 20 | 30 | | 20 | 30 | 40 | 50 | | |
| | PP-1 | B-4 | % by mass | | | | | | | | 65 | |
| | PP-2 | B-5 | % by mass | | | | | | | | | 65 |
| Polyamide resin (C) | 1020J | C | % by mass | | | | 10 | 10 | 10 | 10 | | |
| Acrylic-based elastomer | LA4285 | - | % by mass | | | | | | | | | |
| MFR(A) | | | g/10 min | 30 | 30 | 30 | 30 | 30 | 30 | 30 | 30 | 30 |
| MFR(B) | | | g/10 min | 2 | 2 | 3 | 2 | 2 | 1 | 1 | 14 | 10 |
| MFR(A)-MFR(B) | | | g/10 min | 28 | 28 | 27 | 28 | 28 | 29 | 29 | 16 | 20 |
| Peak temperature at 120 to 170°C in DSC measurement | | | °C | 162 | 163 | 128 | 163 | 163 | 163 | 163 | 128 | 128 |
| Heat of fusion of peak at 120 to 170°C in DSC measurement | | | mJ/mg | 19 | 24 | 26 | 18 | 23 | 27 | 32 | 26 | 26 |
| Heat of fusion due to propylene-based resin (B) in resin composition | | | mJ/mg | 19 | 24 | 26 | 18 | 23 | 27 | 32 | 26 | 26 |

|  |  | Unit | Example 1 | Example 2 | Example 3 | Example 4 | Example 5 | Example 6 | Example 7 | Example 8 | Example 9 |
|---|---|---|---|---|---|---|---|---|---|---|---|
| Weldability using high-frequency welder | PVC sheet | - | OK | OK | OK | OK | OK | OK | OK | OK | OK |
|  | Weldable sheets | - | OK | OK | OK | OK | OK | OK | OK | OK | OK |
| Heat resistance | 70°C | - | OK | OK | OK | OK | OK | OK | OK | OK | OK |
|  | 100°C | - | NG | NG | OK | NG | NG | OK | OK | OK | OK |
| Sheet formability |  | - | A | A | A | A | A | A | A | C | B |
| UV absorbance |  | - | OK | OK | OK | OK | OK | OK | OK | OK | OK |

[Table 2]

| Composition | | | | Unit | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|---|
| | EVA(A) | EV150 | A-1 | % by mass | | 100 | | | 35 | 65 | | | 35 | 20 |
| | | EV260 | A-2 | % by mass | | | | | | | 35 | | | |
| | | EV270 | A-3 | % by mass | | | | | | | | 35 | | |
| | Propylene-based resin (B) | PN9060 | B-1 | % by mass | | | 100 | | 65 | 35 | 65 | 65 | | 40 |
| | | RFG4VM | B-2 | % by mass | | | | | | | | | | |
| | | 7025 | B-3 | % by mass | | | | 100 | | | | | 65 | |
| | Polyamide resin (C) | 1020J | c | % by mass | | | | | | | | | | |
| | Acrylic-based elastomer | LA4285 | - | % by mass | 100 | | | | | | | | | 40 |
| MFR(A) | | | | g/10 min | - | 30 | - | - | 30 | 30 | 6 | 1 | 30 | 30 |
| MFR(B) | | | | g/10 min | - | - | 3 | 1 | 3 | 3 | 3 | 3 | 1 | 3 |
| MFR(A)-MFR(B) | | | | g/10 min | - | - | - | - | 27 | 27 | 3 | -2 | 29 | 27 |
| Peak temperature at 120 to 170°C in DSC measurement | | | | °C | - | 61 | 160 | 163 | 160 | 160 | 160 | 160 | 163 | 160 |
| Heat of fusion of peak at 120 to 170°C in DSC measurement | | | | mJ/mg | - | - | 15 | 63 | 10 | 5 | 10 | 10 | 41 | 6 |

(continued)

| | Unit | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Heat of fusion due to propylene-based resin (B) in resin composition | mJ/mg | - | - | 15 | 63 | 10 | 5 | 10 | 10 | 41 | 6 |
| Weldability using high-frequency welder — PVC sheet | - | OK | OK | NG | NG | OK | OK | NG | NG | NG | OK |
| Weldability using high-frequency welder — Weldable sheets | - | NG | OK | NG | NG | OK | OK | OK | OK | NG | NG |
| Heat resistance — 70°C | - | OK | NG | NG | OK | NG | NG | NG | NG | OK | OK |
| Heat resistance — 100°C | - | OK | NG | NG | OK | NG | NG | NG | NG | OK | OK |
| Sheet formability | - | D | D | D | A | D | D | D | D | A | A |
| UV absorbance | - | NG | - | - | - | - | - | - | - | - | NG |

The following are clear from Tables 1 and 2.

The resin compositions in Examples 1 to 9 have good weldability to a PVC sheet using the high-frequency welder and a high capability to weld weldable sheets together using the high-frequency welder, also have heat resistance that allows the resin compositions to withstand an atmosphere at 70°C, and have low UV absorbance.

The resin composition of the present invention uses the EVA (A) and the propylene-based resin (B) that satisfy the specific conditions. In this case, the structure of the resin composition is controlled such that the EVA (A) forms the matrix phase, so that high weldability using the high-frequency welder is obtained. Moreover, the structure is controlled such that the propylene-based resin (B) forms the domain phase, so that heat resistance can be obtained.

In particular, heat resistance was very high in Examples 3, 6, and 7.

In Example 3, the heat of fusion of the resin composition was set to be relatively high, so that the heat resistance was improved. In Examples 6 and 7, a small amount of the polyamide resin (C) was added. In this case, the amount of heat generated by the weldable sheet itself was high, so that the composition with a high heat of fusion could be melted sufficiently.

In Examples 4 and 5, although the polyamide resin (C) was added, the heat resistance at 100°C was not satisfactory because the heat of fusion of the resin composition was lower than those in other Examples.

In Comparative Example 1, the acrylic-based elastomer alone was used. Although the weldability to PVC using the high-frequency welder was good, the acrylic-based elastomer could not be used to weld the sheets together, and the UV absorbance was high and rated NG. Therefore, this material is not suitable for welding applications using the high-frequency welder and applications with UV absorbance requirements.

In Comparative Example 2, the EVA alone was used. Although the weldability was good, the heat resistance was insufficient because no heat resistance imparting component was contained.

In Comparative Examples 3 and 4, the propylene-based resin used alone was nonpolar, and the weldability was not obtained.

In Comparative Examples 5 and 6, although the weldability was good, the heat resistance was insufficient because the heat of fusion of the resin composition was low.

In Comparative Examples 7 and 8, since MFR (A) - MFR (B) was outside the range of the present invention, the structure could not be controlled such that the EVA formed the matrix phase, so that the weldability was insufficient. Moreover, since the heat of fusion of the resin composition was low, the heat resistance was also insufficient.

In Comparative Example 9, the heat of fusion of the resin composition was excessively high. Therefore, although the heat resistance was good, the weldability was insufficient.

In Comparative Example 10, the amount of the acrylic-based elastomer used in Comparative Example 1 was reduced with the aim of improving the capability to weld the weldable sheets together and the UV absorbance. However, even when the amount added was reduced, sufficient effects were not obtained.

Although the present invention has been described in detail by way of the specific modes, it is apparent for those skilled in the art that various changes can be made without departing from the spirit and scope of the present invention.

The present application is based on Japanese Patent Application No. 2019-026725 filed on February 18, 2019, the entire contents of which are incorporated herein by reference.

Industrial Applicability

According to the resin composition of the present invention, the drawbacks of PVS such as insufficient heat resistance, insufficient chemical resistance, and low shock resistance can be improved. Moreover, the resin composition can be welded to PVC using a high-frequency welder, which is a representative processing method for PVC, and can also be used to weld films or sheets together using the high-frequency welder.

Therefore, the film or multilayer body formed of the resin composition of the present invention can be suitably used for packaging materials for various food products, medical and pharmaceutical products, etc. Moreover, since the UV absorbance of the film or multilayer body formed of the resin composition of the present invention is low, the film or multilayer body can be preferably used for packaging bags for medical use such as infusion bags and tubes, bags for blood-related materials (such as blood plasma bags), and blood circuit tubes.

Claims

1. A resin composition comprising: an ethylene-vinyl acetate copolymer (A); and a propylene-based resin (B),

wherein the melt flow rate (MFR: 190°C, 2.16 kg) MFR (A) of the ethylene-vinyl acetate copolymer (A) and the melt flow rate (MFR: 190°C, 2.16 kg) MFR (B) of the propylene-based resin (B) satisfy relational expression (i) below, and

wherein the resin composition has an endothermic peak at 120 to 170°C in DSC (differential scanning calorimeter) measurement and has a heat of fusion of 15 to 40 mJ/mg at 120 to 170°C:

$$4 \text{ g/10 min} \leq \text{MFR (A)} - \text{MFR (B)} \leq 35 \text{ g/10 min.} \qquad \text{(i)}$$

2. The resin composition according to claim 1, further comprising a polyamide resin (C).

3. The resin composition according to claim 2, wherein the content of the ethylene-vinyl acetate copolymer (A), the content of the propylene-based resin (B), and the content of the polyamide resin (C) are the ethylene-vinyl acetate copolymer (A): 25 to 38% by mass, the propylene-based resin (B): 47 to 60% by mass, and the polyamide resin (C): 2 to 15% by mass (provided that the sum of the content of the ethylene-vinyl acetate copolymer (A), the content of the propylene-based resin (B), and the content of the polyamide resin (C) is 100% by mass).

4. The resin composition according to any one of claims 1 to 3, wherein light absorbance in a wavelength range of 220 to 350 nm is 0.2 or less in a UV spectrum test described in The Japanese Pharmacopoeia Seventeenth Edition, General Tests, 7.02 Test Methods for Plastic Containers, Extractable substances.

5. The resin composition according to any one of claims 1 to 4, wherein the resin composition is a resin composition for dielectric heat welding.

6. A film formed of the resin composition according to any one of claims 1 to 5.

7. A multilayer body prepared by stacking the film according to claim 6 on a substrate.

8. A packaging bag for medical use that uses the film according to claim 6.

9. A packaging bag for medical use that uses the multilayer body according to claim 7.

10. A resin composition for dielectric heat welding, comprising: an ethylene-vinyl acetate copolymer (A) satisfying conditions (A-i) to (A-ii) below; and a propylene-based resin (B) satisfying conditions (B-i) to (B-ii) below:

    (A-i) a melt flow rate (MFR: 190°C, 2.16 kg) is 7 to 50 g/10 min;
    (A-ii) the content of a constitutional unit derived from vinyl acetate is 25 to 45% by mass;
    (B-i) a melt flow rate (MFR: 190°C, 2.16 kg) is 0.05 to 6.5 g/10 min; and
    (B-ii) a value obtained by multiplying the heat of fusion of the propylene-based resin (B) determined from an integral value at -10 to 200°C using a DSC (differential scanning calorimeter) by the content of the propylene-based resin (B) among resin components contained in the resin composition for dielectric heat welding (when the propylene-based resin (B) comprises two or more propylene-based resins (B), the sum of values obtained by multiplying the heats of fusion of the two or more propylene-based resins (B) by the contents thereof) is 15 to 40 mJ/mg.

11. The resin composition for dielectric heat welding according to claim 10, further comprising a polyamide resin (C).

12. The resin composition for dielectric heat welding according to claim 11, wherein the content of the ethylene-vinyl acetate copolymer (A), the content of the propylene-based resin (B), and the content of the polyamide resin (C) are the ethylene-vinyl acetate copolymer (A): 25 to 38% by mass, the propylene-based resin (B): 47 to 60% by mass, and the polyamide resin (C): 2 to 15% by mass (provided that the sum of the content of the ethylene-vinyl acetate copolymer (A), the content of the propylene-based resin (B), and the content of the polyamide resin (C) is 100% by mass).

13. The resin composition for dielectric heat welding according to any of claims 10 to 12, wherein light absorbance in a wavelength range of 220 to 350 nm is 0.2 or less in a UV spectrum test described in The Japanese Pharmacopoeia Seventeenth Edition, General Tests, 7.02 Test Methods for Plastic Containers, Extractable substances.

14. A film formed of the resin composition for dielectric heat welding according to any of claims 10 to 13.

15. A multilayer body prepared by stacking the film according to claim 14 on a substrate.

16. A packaging bag for medical use that uses the film according to claim 14.

17. A packaging bag for medical use that uses the multilayer body according to claim 15.

**INTERNATIONAL SEARCH REPORT**

| International application No. |
| --- |
| PCT/JP2020/005580 |

**A. CLASSIFICATION OF SUBJECT MATTER**

B32B 27/28(2006.01)i; B32B 27/32(2006.01)i; B32B 27/34(2006.01)i; C08L 23/10(2006.01)i; C08L 31/04(2006.01)i; C08L 77/00(2006.01)i; A61J 1/10(2006.01)i

FI: C08L23/10; C08L31/04 S; C08L77/00; B32B27/28 101; B32B27/34; B32B27/32 Z; A61J1/10 331A; A61J1/10 331C

According to International Patent Classification (IPC) or to both national classification and IPC

**B. FIELDS SEARCHED**

Minimum documentation searched (classification system followed by classification symbols)

B32B27/28; B32B27/32; B32B27/34; C08L23/10; C08L31/04; C08L77/00; A61J1/10

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-504109 A (DOW GLOBAL TECHNOLOGIES LLC) 05.02.2015 (2015-02-05) claims, paragraphs [0001]–[0006], [0011], [0012], [0045], examples | 1, 4–10, 13–17 |
| Y | claims, paragraphs [0001]–[0006], [0011], [0012], [0045], examples | 2, 3, 11, 12 |
| X | JP 2006-52243 A (JAPAN POLYPROPYLENE CORPORATION) 23.02.2006 (2006-02-23) claims, paragraphs [0001], [0008]–[0010], [0016], [0074], examples, in particular, production examples, PP-1, PP-2, table 4 | 1, 4–10, 13–17 |
| Y | claims, paragraphs [0001], [0008]–[0010], [0016], [0074], examples, in particular, production examples, PP-1, PP-2, table 4 | 2, 3, 11, 12 |

☒ Further documents are listed in the continuation of Box C. ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 April 2020 (16.04.2020) | 28 April 2020 (28.04.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| | International application No. |
|---|---|
| | PCT/JP2020/005580 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2006-307121 A (JAPAN POLYPROPYLENE CORPORATION) | 1, 4-10, 13-17 |
| Y | 09.11.2006 (2006-11-09) claims, paragraphs [0002]- [0009], [0088], examples, in particular, comparative example B-3 claims, paragraphs [0002]-[0009], [0088], examples, in particular, comparative example B-3 | 2, 3, 11, 12 |
| Y | JP 2003-191405 A (FUJIMORI KOGYO CO., LTD.) 08.07.2003 (2003-07-08) claims, paragraphs [0001]- [0006], [0021], examples | 2, 3, 11, 12 |
| Y | JP 2002-11839 A (FUJIMORI KOGYO CO., LTD.) 15.01.2002 (2002-01-15) claims, paragraphs [0013], [0024], [0039], examples | 2, 3, 11, 12 |
| A | JP 2016-533424 A (DOW GLOBAL TECHNOLOGIES LLC) 27.10.2016 (2016-10-27) | 1-17 |
| A | JP 2018-16759 A (MCPP INNOVATION LLC) 01.02.2018 (2018-02-01) | 1-17 |
| A | JP 6-263937 A (MITSUI SEKIYU KAGAKU KOGYO KABUSHIKI KAISHA) 20.09.1994 (1994-09-20) | 1-17 |

Form PCT/ISA/210 (continuation of second sheet) (January 2015)

| Patent Documents referred in the Report | Publication Date | Patent Family | Publication Date |
|---|---|---|---|
| JP 2015-504109 A | 05 Feb. 2015 | US 2014/0364572 A1<br>claims, paragraphs<br>[0001]-[0010],<br>[0013], [0014],<br>[0043], [0047],<br>examples, table 6<br>WO 2013/096711 A1<br>EP 2794754 A1<br>CN 104125981 A<br>KR 10-2014-0103275 A<br>IN 4427CHN2014 A<br>BR 112014015382 A | |
| JP 2006-52243 A | 23 Feb. 2006 | (Family: none) | |
| JP 2006-307121 A | 09 Nov. 2006 | (Family: none) | |
| JP 2003-191405 A | 08 Jul. 2003 | (Family: none) | |
| JP 2002-11839 A | 15 Jan. 2002 | US 2003/0124370 A1<br>claims, paragraphs<br>[0013], [0024],<br>[0038], [0040],<br>examples<br>WO 2002/000434 A1<br>EP 1304218 A1<br>AU 6783201 A<br>CA 2414574 A<br>CN 1444521 A<br>KR 10-2003-0044918 A<br>AT 438505 T | |
| JP 2016-533424 A | 27 Oct. 2016 | US 2016/0194487 A1<br>WO 2015/042820 A1<br>WO 2015/047796 A1<br>EP 3049477 A1<br>TW 201527384 A<br>CN 105518073 A<br>KR 10-2016-0061350 A | |
| JP 2018-16759 A | 01 Feb. 2018 | (Family: none) | |
| JP 6-263937 A | 20 Sep. 1994 | (Family: none) | |

International application no.

PCT/JP2020/005580

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018016759 A
- JP 2005527401 A
- JP 2019026725 A